# EUROPÄISCHE PATENTSCHRIFT

(11) **EP 1 095 593 B1**
(45) Veröffentlichungstag und Bekanntmachung des Hinweises auf die Patenterteilung: **01.09.2004**
(21) Anmeldenummer: 00122945.9
(22) Anmeldetag: 21.10.2000
(51) Int. Cl.: A47B 21/04, B41J 29/15, B42F 1/10

(54) **Manuskripthalter**
Manuscript holder
Support de manuscrit

(30) Priorität: 26.10.1999 DE 29918846 U
(43) Veröffentlichungstag der Anmeldung: 02.05.2001
(73) Patentinhaber: Plastolan GmbH, 59557 Lippstadt (DE)
(72) Erfinder: Langenbach, Klaus, 59558 Lippstadt (DE)
(74) Vertreter: Strauss, H.-J., Dr.

(56) Entgegenhaltungen:
- DE-A- 19 704 211
- FR-A- 2 690 486
- US-A- 5 533 702
- US-A- 5 845 889

## Beschreibung

Die Erfindung betrifft einen Manuskripthalter für mindestens ein Manuskriptblatt mit einem Grundkörper, der an einen Boden angelenkt und mittels einer Feder so vorgespannt ist. dass Grundkörper und Boden eine das Manuskriptblatt haltende Klammer bilden, wobei der Boden Mittel zum Festlegen an einer Fläche, insbesondere eines Monitorrahmens bei Bildschirm-Arbeitsplätzen aufweist.

Zum Halten von Manuskripten bei Schreib-Arbeitsplätzen sind Haltestellagen bekannt, die mindestens ein Manuskriptblatt aufnehmen und die auf den Arbeitstisch gestellt oder an ihm befestigt werden. Solche Stellagen nehmen viel Platz in Anspruch. Um den Platzbedarf zu verringern, wurden aufstellbare Manuskripthalter geschaffen, die einen Halteschlitz für mindestens ein Manuskriptblatt aufweisen, wobei diese Halteschlitze eine Krümmung aufweisen, die sich im Manuskriptblatt fortsetzt und dieses nach dem Aufstellen stabililisiert, so dass es seine aufrechte Lage beibehält. Besonders bei Bildschirmarbeitsplätzen stehen dabei Manuskripte so, dass das Auge vom Bildschirm zum Manuskript gewendet werden muss, was sich beim Schreiben als nachteilig erwiesen hat. Um dem abzuhelfen, wurde beispielsweise nach US 5,845,889 ein am Gehäuse eines Monitors befestigbarer Manuskripthalter mit einer Federklammervorrichtung zum Halten des Manuskriptblattes entwickelt. Die Federklammer ist mit einer parallel zur Fläche ausgerichteten Achse an einen Fuß angelenkt. Dieser Manuskripthalter hält zwar das Manuskriptblatt im Sichtbereich des auf den Bildschirm gerichteten Auges, das jedoch dabei den Bildschirm zumindest teilweise verdeckt. Einen seitlich an einem Computermonitor befestigbaren Manuskripthalter beschreibt US 5,533,702. Bei diesem Manuskripthalter wird das Manuskriptblatt von Zungen an einer gebogenen Schiene gehalten, die ihrerseits mit einer rechtwinklig zur Fläche ausgerichteten Achse an einen Fuß angelenkt ist, der an der Fläche des Monitors abnehmbar befestigt ist. Hier erstreckt sich die gebogenen Schiene über nahezu die gesamte Höhe des Monitors, eine kompakte Bauweise ist so nicht möglich. Somit stellt sich die Aufgabe, einen solchen gattungsgemäßen Manuskripthalter so weiter zu bilden, dass das Manuskriptblatt, ohne Abdeckung des Bildschirmes, in Sichthöhe gehalten ist, wobei der Manuskripthalter als kompaktes Bauteil einfach herzustellen und problemlos anwendbar ist.

Diese Aufgabenstellung wird nach der Erfindung dadurch gelöst, dass die Basis des Manuskripthalters mit Mitteln zum verdrehbaren Befestigen an der Fläche mit einem Drehteller versehen ist. Dieser Manuskripthalter ist so an der Fläche, beispielsweise einem Bildschirm-Rahmen, des Monitorgehäuses festlegbar; dabei kann der Manuskripthalter so verdreht werden, dass das von ihm gehaltene Manuskriptblatt seitlich vom Bildschirm liegt. Dieses Manuskriptblatt liegt somit in Sichthöhe und der Bildschirm wird freigehalten. Der Manuskripthalter kann dabei sowohl rechts als auch links am Monitorgehäuse angebracht werden.
Die um 360° verdrehbaren Mittel erlauben beide Stellungen. Dabei kommt es nicht auf die Ausbildung des Manuskripthalters an: im Folgenden wird die Erfindung an Hand von zwei Ausführungsformen näher beschrieben, ohne den Gegenstand der Erfindung darauf zu beschränken.

Der Manuskripthalter weist ein Gehäuse auf, an das als Basis ein Boden angelenkt ist, der zum Bilden einer Klammervorrichtung zum Halten des Manuskriptblattes mit einer Feder vorgespannt ist, wobei hier Gehäuse und Boden eine Federklammer-Vorrichtung und so den Blatthalter zum Halten des Manuskriptblattes bilden.

Als Mittel zum Verdrehen ist vorteilhaft ein Drehteller vorgesehen, der mit einem Drehachsstummel oder einem Steckbolzen mit der Basis des Manuskripthalters verbunden ist. Der Kopf des durch die Basis des Manuskripthalters geführten Achsstummels bzw. Steckbolzens ist dabei so verformt, dass der Drehteller an der Basis gehalten ist. Bei einer Ausführungsform ist er dazu pilzartig verformt. Dieser Pilz hintergreift die Basis und hält so den Drehteller an der Basis. Diese pilzartige Verformung kann beim Zusammenbau erfolgen, so dass zunächst der unverformte Steckbolzen durch die Öffnung in der Basis geführt und danach pilzartig verformt wird. Anstelle der pilzförmigen Verformung können auch Hintergreifungsnasen vorgesehen sein. Der durch die Basis geführte Kopf des Drehachsstummels bzw. des Steckbolzens ist dazu mit mindestens zwei Hintergreifungsnasen versehen, die durch die Basis des Manuskripthalters geführt, diese hintergreifen und so Drehteller und Basis verbinden. Der so hergestellte Manuskripthalter ist bei festgelegten Drehtellern gegenüber diesen verdrehbar, so dass die gewünschte Lage des Manuskriptblattes eingestellt werden kann.

Vorteilhaft kann der Steckbolzen im Bereich der pilzartigen Verformung bzw. der Hintergreifungsnasen mit achsparallelen Schlitzen versehen sein. Dies erleichtert den Zusammenbau der Steckbolzen, kann infolge dieser Schlitze zusammengedrückt werden und so durch die Öffnung in der Basis, dem Boden bzw. der Vertiefung des Manuskripthalters oder der Klammerbasis geführt werden. Auf diese Weise kann die Herstellung des Manuskripthalters durch bloßes Zusammenstecken erfolgen, ein Verformen nach dem Zusammenfügen entfällt.

Um den Manuskripthalter am Bildschirmrahmen des Monitors zu befestigen, ist der Drehteller etwa mittels einer Klebefolie, die vorteilhaft doppelseitig klebend auf den Drehteller aufklebbar ist, oder mittels Klettverschlussmitteln (deren zweiter Teil auf der Fläche befestigt ist), versehen werden. Damit kann der Manuskripthalter entweder direkt oder über ein Gegenstück am Rahmen in gewünschter Position am Rahmen des Monitors befestigt werden. Diese Befestigung erlaubt auch ein Wieder-Ablösen, so dass der Manuskripthalter bei geänderten Bedürfnissen auch an andere Stellen umgesetzt werden kann. Vorteilhaft weist der die Basis bildende Boden Rastvertiefungen auf, und der Drehteller korrespondierend dazu eine Rastnase. Durch diese Mittel wird die Einstellung rastbar und somit in gewünschter Position auch festlegbar. Diese Rastvertiefungen werden vorteilhaft auf einem Vollkreis angeordnet, so dass ein Einrasten in vom Abstand der Rastvertiefungen gegebenen Abständen über volle 360° erfolgt. Alternativ kann auch der Drehteller mit den Rastvertiefungen und die Basis mit einer Rastnase versehen sein, wobei es sich von selbst versteht, dass Rastnasen und Rastvertiefungen als gleichwirkende Mittel auch ausgetauscht werden können.

Bei einer bevorzugten Ausbildung des Manuskripthalters ist der Körper des Manuskripthalters mit einen an sich bekannten, gekrümmten Schlitz zur Aufnahme mindestens eines Manuskriptblattes versehen. Dadurch kann der Manuskripthalter am Rahmen eines Monitors befestigt werden oder alternativ auf eine Tischfläche o.dgl. gestellt in an sich bekannter Weise mit aufrecht stehendem Manuskriptblatt benutzt werden.

Der Manuskripthalter wird vorteilhaft aus Kunststoff, vorzugsweise als Kunststoff-Spritzguß-Teil hergestellt. Bei der einen Ausführungsform sind so das Gehäuse und dessen Boden sowie der Drehteller als Kunststoff-Teile, vorzugsweise als Kunststoff-Spritzgießteile ausgebildet.

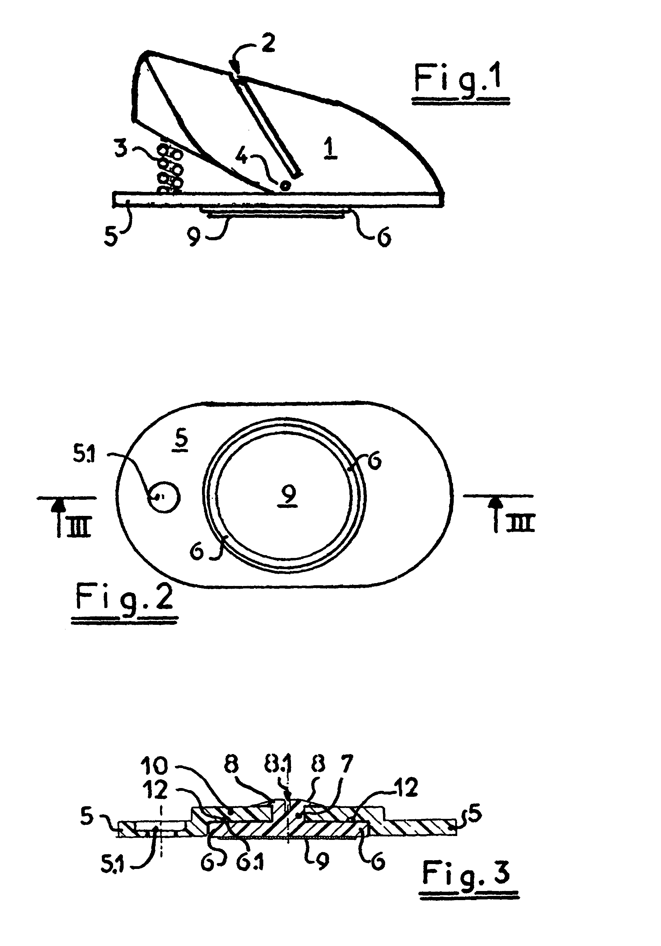

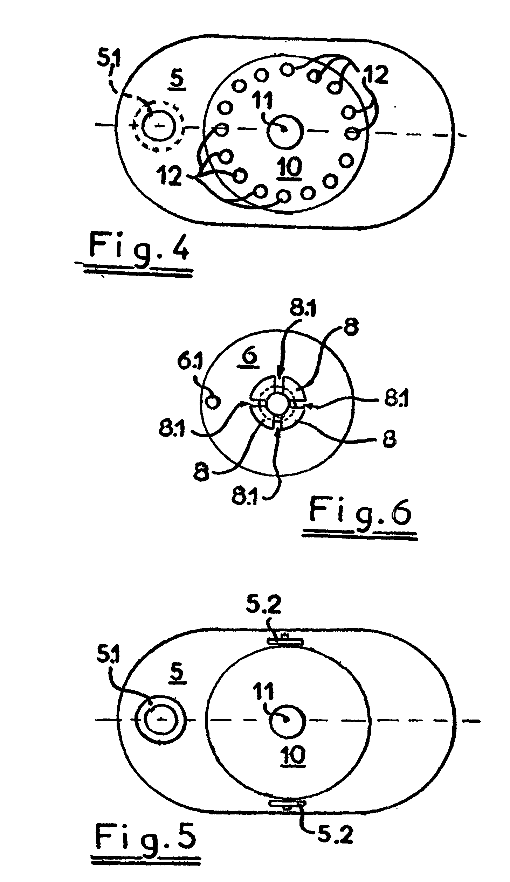

Das Wesen der Erfindung wird anhand der in den Figuren 1 bis 6 dargestellten Ausführungsbeispiele näher erläutert, dabei zeigen:
- Fig. 01:: Manuskripthalter mit Federklammer und Drehteller (Seitansicht);
- Fig. 02:: Boden des Manuskripthalters (Aufsicht);
- Fig. 03:: Boden des Manuskripthalters (Untersicht);
- Fig. 04:: Boden des Manuskripthalters (Schnitt III-III, Fig. 2);
- Fig. 05:: Boden des Manuskripthalters (Aufsicht);
- Fig. 06:: Drehteller mit Steckbolzen (Aufsicht);

Der Manuskripthalter mit Federklammer wird von einem Grundkörper 1 gebildet, der entsprechend ausgeformt mit dem Boden 5 eine Klammer bildet. Dazu ist der Boden 5 mit Achshaltern 5.2 mit Achsstummeln versehen, die in die Achsaufnahme 4 eingreifen, so dass der Boden 5 schwenkbar an den Grundkörper 1 angelehnt ist. Zwischen Grundkörper 1 und Boden 5 ist eine Feder 3 vorgesehen, mit der die Klammer in geschlossenem Zustand so vorgespannt ist, dass ein Papierblatt, nämlich das Manuskriptblatt, sicher gehalten wird. Zur Zweitnutzung des Manuskripthalters ist der Grundkörper 1 mit einem Halteschlitz 2 versehen, in den das Manuskriptblatt bei auf eine waagrechte Fläche aufgestelltem Manuskripthalter eingeführt werden kann. Dieser Halteschlitz 2 weist eine Krümmung in sich auf, die das Papierblatt des Manuskriptes krümmt und somit stabilisiert.

Zentral in dem Boden 5 ist eine Vertiefung 10 vorgesehen, in die der Drehteller 6 eingesetzt werden kann. Die Tiefe dieser Vertiefung 10 entspricht der Dicke des Drehtellers 6, der zumindest bündig, vorteilhaft mit geringem Übermaß versehen, eingesetzt ist, so dass das auf ihm vorgesehene Befestigungsmittel - etwa eine doppelseitige klebende Folie 9 - aus der durch die Unterseite des Bodens 5 gegebene Ebene herausragt und eine Befestigung an einem Bildschirmrahmen eines Monitors erlaubt. Zur Befestigung des Drehtellers 6 am Boden 5 ist in der Vertiefung 10 des Boden 5 ein zentrales Loch 11 vorgesehen, des sen Durchmesser dem Durchmesser des Steckbolzens 7 des Drehtellers 6 entspricht. Das freie Ende des Steckbolzens 7 ist mit Hintergreifungsmitteln, etwa Hintergreifungsnasen 8, versehen, die die Vertiefung 10 hintergreifen und so Drehteller 6 und Boden 5 miteinander verbinden. Dabei bleibt die Verdrehbarkeit des Drehtellers 6 erhalten. Um die Hintergreifungsmittel durch das zentrale Loch 11 führen zu können, weist der Steckbolzen 7 vorteilhaft achsparallele Schlitze 8.1 auf, die ein Zusammendrücken des freien Endes des Steckbolzens 7 erlauben.

Im Zusammenwirken mit äußeren Schrägflächen der Hintergreifungsnasen kann so der Steckbolzen 7 mit seinen Hintergreifungsmitteln ohne grösseren Kraftaufwand durch das zentrale Loch 11 geführt werden. In der Vertiefung 10 sind Rastvertiefungen 12 vorgesehen, die in Abständen auf einem Vollkreis angeordnet sind. Diese Vertiefungen 12 wirken mit einer Rastnase 6.1 zusammen, so dass der Drehteller in ausgewählten Positionen einrastet und so nur mit einem gewissen Kraftaufwand aus dieser Stellung heraus weiter verdreht werden kann.

## Patentansprüche

1. Manuskripthalter für mindestens ein Manuskriptblatt mit einem Grundkörper (1), der an einen Boden (5) angelenkt und mittels einer Feder (3) so vorgespannt ist, dass Grundkörper (1) und Boden (5) eine das Manuskriptblatt haltende Klammer bilden, wobei der Boden (5) Mittel zum Festlegen an einer Fläche, insbesondere eines Monitorrahmens bei Bildschirm-Arbeitsplätzen aufweist, und dessen der Fläche zugewandte Außenseite mit Mittel zum Festlegen an der Fläche versehen ist, **dadurch gekennzeichnet, dass** als Mittel zum Festlegen des Manuskripthalters an der Fläche eine drehbare Verbindung vorgesehen ist, gebildet von einem in eine Vertiefung (10) am Boden (5) des Grundkörpers (1) eingesetzten Drehteller (6), der mit einem zentralen Steckbolzen (7) mit dem Boden (5) verbunden ist.

2. Manuskripthalter nach Anspruch 1, **dadurch gekennzeichnet, dass** der durch den Boden (5) geführte Steckbolzen (7) den Boden (5) hintergreifende Hintergreifungsmittel aufweist.

3. Manuskripthalter nach Anspruch 2, **dadurch gekennzeichnet, dass** die freien Enden des Steckbolzens (7) zur Bildung der Hintergreifungsmittel pilzartig verformt sind.

4. Manuskripthalter nach Anspruch 2, **dadurch gekennzeichnet, dass** die freien Enden des Steckbolzens (7) zur Bildung der Hintergreifungsmittel mit Hintergreifungsnasen (8) versehen sind.

5. Manuskripthalter nach Anspruch 3 oder 4, **dadurch gekennzeichnet, dass** der Steckbolzen (7) zumindest im Bereich des Pilzes bzw. der Hintergreifungsnasen (8) achsparallele Schlitze (8.1) aufweist, die ein Zusammendrücken so erlauben, dass der Steckbolzen (7) durch das Loch (11) in der Vertiefung (10) führbar ist.

6. Manuskripthalter nach einem der Ansprüche 1 bis 6, **dadurch gekennzeichnet, dass** als Mittel zum Festlegen des Manuskripthalters an der Fläche ein doppelseitiges Klebeband oder als ein Teil eines Klettverschlusses, dessen anderer Teil auf der Fläche angeordnet ist, ausgebildet sind.

7. Manuskripthalter nach einem der Ansprüche 2 bis 6, **dadurch gekennzeichnet, dass** die dem Drehteller (6) zugewandte Seite der Vertiefung (10) und der Drehteller (6) miteinander zusammenwirkende Rastmittel in Form von kreisförmig angeordneten Rastvertiefungen (12) sowie dazu korrespondierend eine Rastnase (6.1) aufweisen.

8. Manuskripthalter nach einem der Ansprüche 1 bis 7, **dadurch gekennzeichnet, dass** der Körper (1) des Manuskripthalters einen an sich bekannten, gekrümmten Halteschlitz (2) zur Aufnahme mindestens eines Manuskriptblattes aufweist.

## Claims

1. Manuscript holder for at least one manuscript sheet with a bottom body part (1) which is articulated to a base (5) and preloaded by means of a spring (3) so that the bottom body part (1) and the base (5) form a clamp which holds the manuscript sheet, wherein the base (5) exhibits means for secure attachment to a surface, in particular of a monitor frame in work stations, and whose outside facing the surface is provided with means for secure attachment to the surface, **characterised in that** the means for secure attachment of the manuscript holder to the surface take the form of a rotatable connection, formed by a rotatable disc (6) which is fitted into a recess (10) in the base (5) of the bottom body part (1) and connected to the base (5) with a central pivot pin (7).

2. Manuscript holder according to claim 1, **characterised in that** the pivot pin (7) passed through the base (5) exhibits retaining means gripping behind the base (5).

3. Manuscript holder according to claim 2, **characterised in that** the free ends of the pivot pin (7) are deformed like a mushroom to form the retaining means.

4. Manuscript holder according to claim 2, **characterised in that** the free ends of the pivot pin (7) are provided with retaining lugs (8) to form the retaining means.

5. Manuscript holder according to claim 3 or 4, **characterised in that** at least in the area of the mushroom or the retaining lugs (8) the pivot pin (7) exhibits axially parallel slots (8.1) which allow compression so that the pivot pin (7) can be passed through the hole (11) in the recess (10).

6. Manuscript holder according to one of claims 1 to 6, **characterised in that** the means for secure attachment of the manuscript holder to the surface take the form of a double-sided adhesive tape or one part of a hook and loop fastener the other part of which is arranged on the surface.

7. Manuscript holder according to one of claims 2 to 6, **characterised in that** the side of the recess (10) facing the rotatable disk (6) and the rotatable disk (6) exhibit detent means which cooperate with one another and take the form of detent recesses (12) arranged in a circle and a detent lug (6.1) corresponding therewith.

8. Manuscript holder according to one of claims 1 to 7, **characterised in that** the bottom body part (1) of the manuscript holder exhibits a curved retaining slot (2) known per se for receiving at least one manuscript sheet.

## Revendications

1. Support de manuscrit pour au moins une feuille de manuscrit, comportant un corps de base (1), qui est articulé sur une base (5) et est précontraint au moyen d'un ressort (3) de telle sorte que le corps de base (1) et la base (5) forment une pince retenant la feuille de manuscrit, dans lequel la base (5) comporte des moyens pour une fixation à une surface, notamment à un cadre de moniteur dans des postes de travail à écran, et dont le côté extérieur tourné vers la surface est équipé de moyens de fixation sur la surface, **caractérisé en ce qu'**il est prévu comme moyens pour fixer le support de manuscrit sur la surface, une liaison pivotante, formée par un plateau rotatif (6) inséré dans un renfoncement (10) de la base (5) du corps de base (1) et relié par un goujon embrochable central (7) à la base (5).

2. Support de manuscrit selon la revendication 1, **caractérisé en ce que** le goujon embrochable (7) guidé à travers la base (5) comporte des moyens d'engagement arrière, qui s'engagent derrière la base (5).

3. Support de manuscrit selon la revendication 2, **caractérisé en ce que** les extrémités libres du goujon enbrochable (7) sont conformées en forme de champignon pour la formation des moyens d'engagement arrière.

4. Support de manuscrit selon la revendication 2, **caractérisé en ce que** les extrémités libres du goujon embrochable (7) sont équipées de becs d'engagement arrière (8) pour la formation de moyens d'engagement arrière.

5. Support de manuscrit selon la revendication 3 ou 4, **caractérisé en ce que** le goujon embrochable (7) comporte, au moins dans la zone du champignon ou des becs d'engagement arrière (8), des fentes (8.1) parallèles à l'axe, qui permettent une compression de telle sorte que le goujon embrochable (7) peut être guidé à travers le trou (11) dans le renfoncement (10).

6. Support de manuscrit selon l'une des revendications 1 à 6, **caractérisé en ce qu'**on utilise comme moyens pour fixer le support de manuscrit sur la surface, une bande adhésive double face ou une partie d'un système de fermeture autoagrippante, dont l'autre partie est disposée sur la surface.

7. Support de manuscrit selon les revendications 2 à 6, **caractérisé en ce que** le côté, tourné vers le plateau rotatif (6), du renfoncement (10) et le plateau rotatif (6) comportent des moyens d'encliquetage l'un à l'autre qui coopèrent entre eux et se présentent sous la forme de renfoncements d'encliquetage (12) disposés selon un cercle ainsi que d'un bec d'encliquetage (6.1) qui leur correspond.

8. Support de manuscrit selon les revendications 1 à 7, **caractérisé en ce que** le corps (1) du support de manuscrit possède une fente de retenue courbe (2) connue en soi, servant à recevoir au moins une feuille de manuscrit.
